# EUROPEAN PATENT APPLICATION

(11) **EP 4 471 419 A1**
(43) Date of publication of application: **04.12.2024**
(21) Application number: 23176846.6
(22) Date of filing: 01.06.2023
(51) Int. Cl.: G01N 27/68, G01N 27/70

(54) **GAS SENSOR AND METHOD OF MANUFACTURING THE GAS SENSOR**

(71) Applicant: Peckiiless AB, 412 79 Göteborg (SE)
(72) Inventor: ADVAND, Marzyeh, 412 79 GÖTEBORG (SE)
(74) Representative: Kransell & Wennborg KB

(57) **Abstract**

A gas sensor (100) comprising: a black silicon substrate (102) comprising silicon protrusions (104); a layer of nanostructures (106) arranged on the silicon protrusions, wherein the nanostructures are configured to interact with a predetermined substance in a gas; a first electrode (108) arranged in electrical connection with the black silicon substrate; and a second electrode (110) arranged above and at a distance from the nanostructures and configured to receive a field emission current being emitted by the silicon protrusions and nanostructures resulting from a voltage applied across the first and second electrodes.

## Description

### Field of the Invention

The present invention relates to a gas sensor. In particular, the present invention relates to a gas sensor comprising nanostructures configured to detect specific substances in a gas.

### Background of the Invention

Gas sensors are used in a variety of settings, including industrial processes, environmental monitoring, and personal safety applications. They are essential for detecting and monitoring the levels of potentially hazardous gases in the air, such as carbon monoxide, methane, hydrogen sulfide, and methyl nitrate for alerting individuals or systems to take appropriate action if those levels become too high. Gas sensors typically consist of a sensing element, which reacts with the gas being detected and produces an electrical signal proportional to the concentration of that gas. The sensing element can take many forms, such as metal oxide semiconductors, electrochemical cells, or infrared detectors, depending on the type of gas being detected and the specific application of the sensor.

One type of gas sensor is based on field emission which plays a vital role in gas sensing with high sensitivity and accuracy. An example application is the diagnosis of diseases from human respiration, where it is needed to detect tiny concentrations of specific gases with high precision, high sensitivity and high selectivity in the mixture of gasses in exhalation breath, and also with low power expenditure. The exponential dependence of current on the applied voltage in a field emission sensor makes field emission sensing an interesting option for measuring low concentrations of substances in gases.

One specific application is monitoring of blood glucose levels which is important in the management of diabetes disease and of gestational diabetes. Typically, blood glucose monitoring is an invasive technique that may cause distress and discomfort, particularly for children. The development of noninvasive methods such as a breath test to estimate blood glucose concentration in correlation to diabetes disease is an attractive alternative as it is less painful and causes less discomfort. A gas sensor replacing the need for one-time needles used in blood sampling could also significantly reduce the amount of medical waste. Exhaled respiratory fluid consist of a wide variety of volatile organic compounds and those compounds can be associated with certain health conditions which may also enable non-invasive detection of glucose and cholesterol in exhalation breath.

Further advantageous applications for gas sensors include monitoring of toxic gases, air pollution, and greenhouse and toxic gas emissions from for example fertilizers and agriculture areas, and in improving worker safety in process industries such as semiconductor manufacturing.

Accordingly, it is desirable to further develop and improve field emission-based gas sensors.

### Summary

In view of the above-mentioned and other drawbacks of the prior art, it is an object of the present invention to provide an improved gas sensor providing high sensitivity and selectivity to substances in a gas.

According to a first aspect of the invention, it is provided a gas sensor comprising: a black silicon substrate comprising silicon protrusions; a layer of nanostructures arranged on the silicon protrusions, wherein the nanostructures are configured to interact with a predetermined substance in a gas; a first electrode arranged in electrical connection with the black silicon substrate; and a second electrode arranged above and at a distance from the nanowires and configured to receive a field emission current being emitted by the nanowires resulting from a voltage applied across the first and second electrodes.

Black silicon is a semiconductor material having surface structures reducing the reflection of visible and infrared light, hence the name "black" silicon. The silicon protrusions of the black silicon substrate typically have sizes in the nanometer to micrometer range and can be formed by different surface treatment methods as will be described. Accordingly, the term "black silicon" should in the present context be seen as a silicon substrate having a surface in the form of protruding silicon structures.

The field emission effect plays an important role in high sensitivity gas sensing and the present invention is based on the realization that the sensitivity of a field-emission based gas sensor can be further improved by combining functionalized nanostructures with the silicon protrusions of black silicon. In particular, field emission can be enhanced by the protruding silicon structures, and through different nanostructures configured to react with different substances, a change in field emission current is detected as a result of an interaction between the nanostructure and a selected substance in a gas. Furthermore, the use of black silicon as the substrate provides a high surface area for functionalization which in turn improves the sensitivity of the gas sensor.

The described gas sensor is advantageously used in the field of breath analysis where low concentrations of biomarkers for conditions such as diabetes can be detected. Such biomarkers include acetone, carbon monoxide, ammonia, ethanol, isopropanol, isoprene, 2-pentyl nitrate and methyl nitrate. The gas sensors may also be used in other contexts, such as for detection of toxic gases or pollutants.

According to one embodiment of the invention, the silicon protrusions have a height in the range of 1 µm to 3 µm. Moreover, the silicon protrusions advantageously have a substantially conical shape with a base diameter in the range of 50 nm to 200 nm and a tip diameter preferably below 20 nm. This means that at least a majority of the nanostructures are tapered so that the top of the protrusion is thinner than the base which improves field-emission properties of the protrusions. Accordingly, the overall shape of the protrusions may be needle-shaped, conical or pyramid-shaped, or a combination thereof. Moreover, the protrusions may be referred to as nanorods, nanospikes or the like.

The silicon protrusions typically consist of crystalline silicon when formed by removal of material from a single-crystalline silicon substrate. The silicon protrusions may also be doped to improve current transport, for example by forming the protrusions from a doped silicon substrate.

According to various embodiments, the nanostructures may comprise cucurbituril cages such as cucurbituril cages functionalized with Cu for detection of 2-pentyl nitrate or cucurbit[8]uril-capped Au nanoparticles for detection of methyl nitrate.

According to one embodiment of the invention, the gas sensor comprises a first area portion comprising a first type of nanostructures configured to interact with a first substance in a gas and a second area portion comprising a second type of nanostructures configured to interact with a second substance in a gas, the second substance being different from the first substance.

The gas sensor is thereby capable of detecting several different substances simultaneously which can be important for example in diagnosis applications where a complex gas such as human breath is analyzed and where conditions can be detected by observing concentrations of a plurality of different substances in the exhaled air. Accordingly, by preparing different area portions with different types of nanostructures configured to react with different substances, a combined measurement can be achieved where the combined concentration of different substances can be achieved.

According to one embodiment of the invention, the second electrode is arranged above the first area portion, the gas sensor further comprising a third electrode arranged above and at a distance from the second area portion configured to receive a field emission current being emitted by the second type of nanostructures resulting from a voltage applied across the first and third electrodes.

The first second and third electrodes are preferably individually controllable and connected to readout circuitry so that the current between the first and second and first and third electrodes can be determined individually. Thereby, different substances can be detected simultaneously using one and the same sensor which greatly improves the flexibility and possible applications for the described gas sensor. There is in principle no limit on how many different substances can be detected by one and the same sensor and since the number of substances to be detected is determined by the number of different are portions with different types of nanostructures, and with corresponding individually controllable electrodes arranged over the different area portions. Moreover, the different electrodes can be read serially, parallelly, or a combination thereof depending on the configuration of the readout circuitry.

According to one embodiment of the invention, the nanostructures comprise cucurbituril cages functionalized with Cu for detection of 2-pentyl nitrate. In the present context, "functionalization" refers to chemical deposition of substances where the purpose of the deposited substance is to interact with or facilitate interaction with a predetermined substance in a gas. Accordingly, the silicon protrusions can be referred to as functionalized after deposition of selected nanostructures on the silicon substrate.

According to one embodiment of the invention, the nanostructures comprise cucurbit[8]uril-capped AU nanoparticles for detection of methyl nitrate.

According to one embodiment of the invention, the nanostructures comprise supramolecular FeII4L4 cages for detection of ammonia.

According to a second aspect of the invention, it is provided a method of manufacturing a gas sensor, the method comprising: providing a silicon substrate; forming silicon protrusions on the silicon substrate; forming a first electrode arranged in electrical connection with the silicon substrate; forming a layer of nanostructures on the silicon protrusions, wherein the nanostructures are configured to interact with a predetermined substance in a gas; arranging a second electrode above and at a distance from the nanostructures, the second electrode being configured to receive a field emission current emitted by the silicon protrusions and nanostructures resulting from a voltage applied across the first and second electrodes.

According to one embodiment of the invention, forming silicon protrusions on the silicon substrate comprises using metal assisted chemical etching comprising the steps of: providing a silicon substrate; depositing a metal catalyst film on the silicon substrate; coating the silicon substrate with polystyrene spheres, the polystyrene spheres being configured to self-assemble on the silicon substrate; performing reactive ion etching to reduce the size of the self-assembled polystyrene spheres; performing etching of the silicon substrate to form a surface comprising protruding silicon structures; and removing the polystyrene spheres.

According to one embodiment of the invention, forming a layer of nanostructures on the silicon protrusions comprises: performing plasma treatment of the silicon protrusions; performing functionalization of the silicon protrusions; depositing cucurbut[8]uril-capped Au nanoparticles onto the functionalized silicon protrusions. By functionalization with cucurbut[8]uril-capped (CB[8]) Au nanoparticles, methyl nitrate in a gas can be detected.

According to one embodiment of the invention, performing functionalization of the silicon nanostructures comprises forming carboxyl groups or amino groups on the silicon nanostructures. The carboxyl or amino groups on the surface of the silicon protrusions facilitate the attachment of thiolated CB[8] ligands on the surface of the Au nanoparticles. This in turn enables the Au nanoparticles to interact specifically with methyl nitrate molecules, leading to an increase in the sensitivity and selectivity of the sensor.

According to one embodiment of the invention, forming a layer of nanostructures on the silicon protrusions comprises: depositing a supramolecular Fe^{II}₄L₄ cage on the silicon protrusions using a linker molecule, thereby enabling sensing of ammonia.

According to one embodiment of the invention, depositing the supramolecular Fe^{II}₄L₄ cage comprises immersing the silicon nanostructures in a solution comprising supramolecular Fe^{II}₄L₄ cages and at least one linker molecule selected from the group comprising 3-mercaptopropionic acid (MPA) and 11-mercaptoundecanoic acid (MUA).

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a gas sensor according to an example embodiment of the invention;
Fig. 2 schematically illustrates a gas sensor according to an example embodiment of the invention;
Fig. 3 schematically illustrates a gas sensor according to an example embodiment of the invention;
Fig. 4 schematically outlines a method of manufacturing a gas sensor according to an embodiment of the invention;
Fig. 5 schematically outlines a method of manufacturing a gas sensor according to an embodiment of the invention;
Fig. 6 schematically illustrates features of a gas sensor according to an example embodiment of the invention; and
Fig. 7 schematically outlines details of a method of manufacturing a gas sensor according to an embodiment of the invention.

### Detailed Description of Example Embodiments

In the present detailed description, various embodiments of the gas sensor and method for manufacturing a gas sensor according to the present invention are mainly described with reference to a gas sensor for detecting biomarkers related to diabetes and cholesterol. However, the skilled person readily realizes that the described type of gas sensor can be used in a wide range of applications where there is a need to detect various substances in gasses.

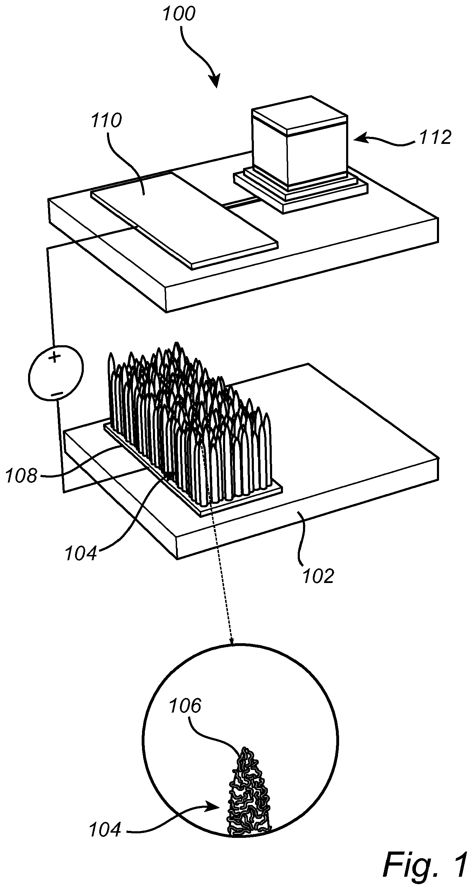

Fig. 1 schematically illustrates a gas sensor 100 comprising a black silicon substrate 102 comprising silicon protrusions 104. A layer of nanostructures 106 is arranged on the silicon protrusions 104 and the nanostructures 106 are configured to interact with a predetermined substance in a gas. The amount, type and area coverage of the nanostructures on the protruding silicon structures 104 may vary greatly depending on the type of nanostructures, deposition methods and on the required sensitivity of the gas sensor. Accordingly, a "layer" does not have to mean a continuous layer or that the layer is fully covering the surface of the silicon protrusions 104. Here, a layer of nanostructures means that nanostructures 106 are located on the surface of the of the silicon protrusions 104.

The gas sensor 100 further comprises a first electrode 108 arranged in electrical connection with the black silicon substrate 102 and a second electrode 110 arranged above and at a distance from the nanostructures 106 and configured to receive a field emission current being emitted by the nanostructures 106 resulting from a voltage applied across the first and second electrodes 108, 110. The electrode connected to the silicon substrate, here the first electrode 108, can be referred to as the cathode and the electrode arranged above the nanostructures 106, here the second electrode 110, can be referred to as the anode 110. The anode 110 can for example be made from tungsten.

The gas sensor 100 is based on the principle that field emission properties of the silicon protrusions 104 change when a substance to be detected interacts with the nanostructures 106 arranged on the silicon protrusions 104. By monitoring the field emission current for an applied voltage over the two electrodes 108, 110, it is thereby possible to determine a concentration of a substance in a gas.

The use of black silicon (b-Si) comprising protrusions in the form of nanorods for field emission offers several advantages such as:
High field enhancement: Black silicon nanorods have a unique surface morphology with numerous sharp tips and high aspect ratios. The morphology promotes enhanced field emission due to the concentration of the electric field at the nanorod tips. The high field enhancement allows for efficient electron emission at relatively low electric fields, making black silicon nanorods suitable for field emission applications.

Large effective emitting area: The nanorod structure of black silicon provides a large effective emitting area. The high aspect ratio and increased surface area of the nanorods allow for a greater number of emission sites. This leads to higher electron current density, resulting in improved field emission performance.

Mechanical stability: Black silicon nanorods possess good mechanical stability and durability. They are resistant to bending, deformation, and other mechanical stresses, making them suitable for long-term and robust field emission applications.

Tunable emission properties: The field emission properties of black silicon nanorods can be tailored and optimized by adjusting their dimensions, surface morphology, and doping levels. These parameters can be controlled during fabrication, allowing for fine-tuning of the emission characteristics to meet specific application requirements.

Low turn-on voltage: Black silicon nanorods typically exhibit low turn-on voltages for field emission. This means that they can emit electrons at lower electric field strengths compared to other materials, resulting in lower power consumption and efficient operation in field emission devices.

Fast emission response: The unique surface morphology and sharp tips of black silicon nanorods facilitate rapid electron emission response. They allow for quick emission of electrons when subjected to an applied electric field, enabling fast detection or response times in field emission-based devices.

Compatibility with fabrication processes: Black silicon nanorods can be fabricated using scalable and cost-effective techniques, such as metal-assisted chemical etching. This allows for large-scale production and compatibility with existing microfabrication processes, enabling integration into various devices and applications.

Overall, the advantages of using black silicon nanorods for field emission include high field enhancement, large emitting area, mechanical stability, tunable emission properties, low turn-on voltage, fast emission response, and compatibility with fabrication processes. These advantages make black silicon nanorods a promising material for field emission-based devices in areas such as sensors, electron sources, and energy conversion devices.

The black silicon substrate 102 can be prepared from a plain silicon substrate through various approaches, from purely chemistry-based method to physical etching methods and a combination thereof. Methods for forming a black silicon surface include metal-assisted chemical etching (MACE), reactive ion etching (RIE), laser irradiation and plasma immersion ion implantation (PIII).

In an example embodiment illustrated in Fig. 1, the silicon protrusions 104 are needle shaped structures having a substantially conical shape, a height in the range of 1 µm to 3 µm and a base diameter in the range of 50 nm to 200 nm. Accordingly, since the silicon protrusions 104 have dimensions in the nanometer range, they may also be referred to as silicon nanorods, nanowires, nanoneedles or the like.

The active sensing area of the gas sensor 100, which is the area comprising silicon protrusions 104 with nanostructures 106, may be approximately 1 cm² and a distance between the tips of the silicon protrusions and 104 and the second electrode may be in the range of 100 µm to 400 µm. However, sizes, distances and dimensions may vary greatly depending for example on the materials used and on the types of substances to be detected.

The illustrated gas sensor 100 further comprises control circuitry 112 configured to control a voltage between the electrodes 108, 110 and/or to detect and measure a field emission current.

Moreover, the gas sensor 100 may be placed in a closed chamber where the supply of gas to eh sensor is controlled by valves or the like, thereby avoiding that the sensor becomes contaminated prior to use.

The use of black silicon nanorods for gas sensors with field emission mechanisms can offer several benefits and potential advantages:
Enhanced sensitivity: Black silicon nanorods possess a high aspect ratio and large surface area, which allows for increased sensitivity to gas molecules. The increased surface area provides more active sites for gas adsorption, leading to improved detection capabilities.

Fast response time: The field emission mechanism allows for rapid response times in gas sensing applications. Black silicon nanorods can efficiently emit electrons under an applied electric field, resulting in a quick detection response when gas molecules interact with the surface.

Low power consumption: Field emission-based gas sensors typically operate at low voltages, enabling energy-efficient operation. Black silicon nanorods exhibit excellent field emission properties, allowing for low-power sensor designs and prolonged battery life in portable devices.

Selectivity and specificity: Black silicon nanorods can be functionalized with various chemical coatings or surface modifications to enhance selectivity and specificity towards specific gas analytes. By tailoring the surface properties, it becomes possible to differentiate between different gases and reduce false positives.

Stability and durability: Black silicon nanorods have been shown to exhibit mechanical stability and resistance to harsh environmental conditions. This robustness ensures the longevity and durability of the gas sensor, making it suitable for long-term monitoring applications.

Miniaturization and integration: Black silicon nanorods can be fabricated using scalable processes, allowing for miniaturization and integration into compact sensing devices. This feature makes them suitable for deployment in wearable sensors, Internet of Things (IoT) devices, and other compact systems.

Cost-effectiveness: Black silicon nanorods can be manufactured using cost-effective techniques such as metal-assisted chemical etching, making them potentially affordable for large-scale production. This cost advantage can facilitate widespread adoption of gas sensors in various industries and applications.

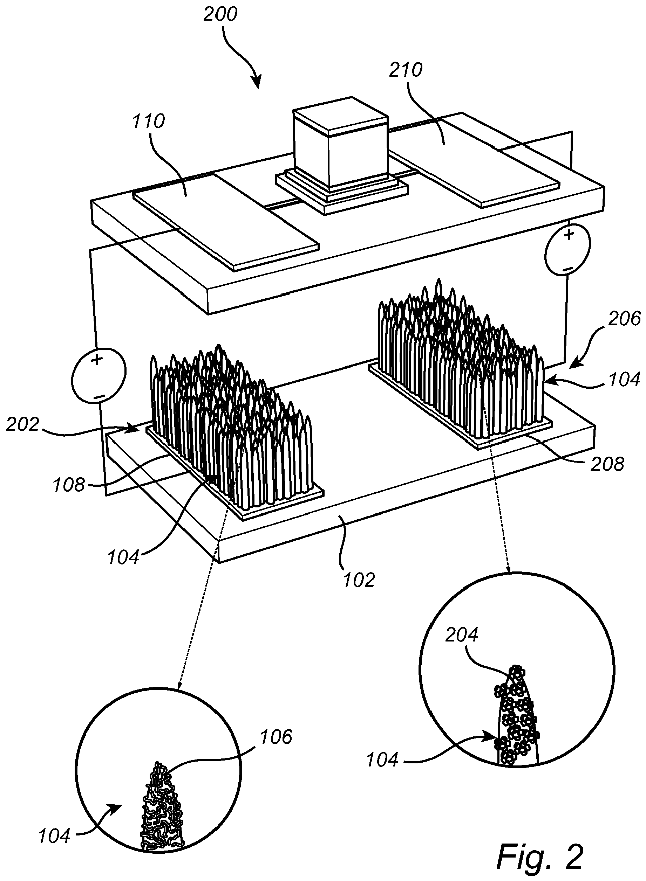

Fig. 2 schematically illustrates a gas sensor 200 according to an example embodiment where the gas sensor 200 comprises a first area portion 202 with silicon protrusions 104 comprising a first type of nanostructures 106 configured to interact with a first substance in a gas and a second area portion 206 having silicon protrusions 104 comprising a second type of nanostructures 204 configured to interact with a second substance in a gas, the second substance being different from the first substance. The first and second area portions 202, 206 with silicon protrusions 104 are arranged on the same black silicon substrate 102.

The gas sensor further comprises two top electrodes 110, 210 arranged above and at a distance from the respective the first and second area portions 202, 206, configured to receive a field emission current being emitted by the respective silicon protrusions 104 comprising the first and second type of nanostructures 106, 204 resulting from a voltage applied between the top and bottom electrodes. It should be noted that the cathode, i.e. the electrode connected to the silicon substrate may be a common electrode for a plurality of anodes. The common electrode could then be connected to a common ground potential. In Fig. 2, the gas sensor 200 comprises two separate bottom electrodes 108, 208 so that the potentials over the respective area portion 202, 206 can be controlled individually.

Accordingly, the described gas sensor 200 is capable of simultaneously detecting several different substances in a gas. It would also be possible to provide different area portions of the sensor with different nanostructures configured to detect the same substance in a gas to improve sensitivity or increase detectability for a specific substance.

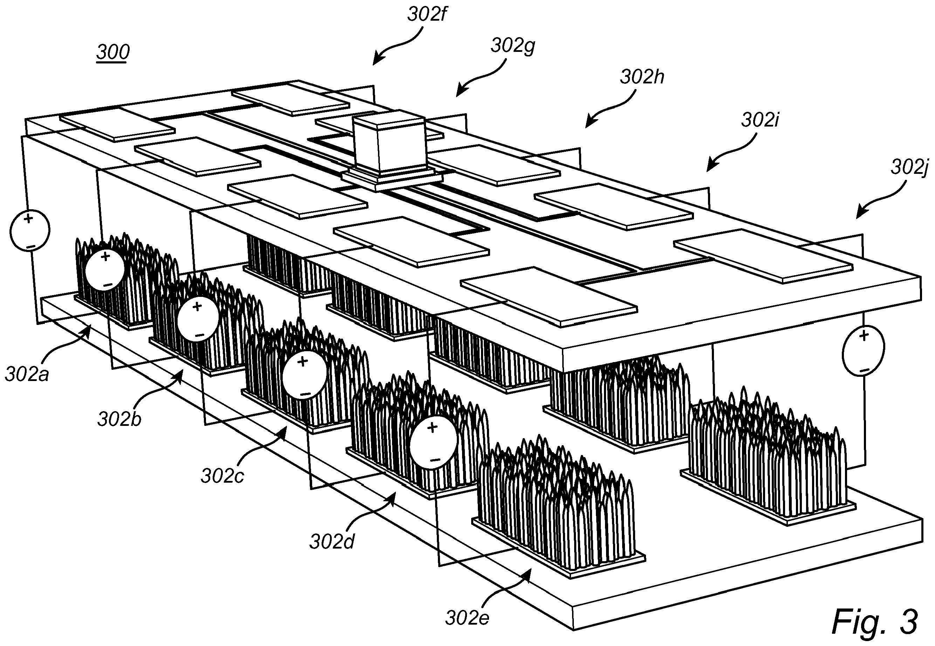

Fig. 3 schematically illustrates a gas sensor comprising ten separate area portions 302a-j comprising silicon protrusions 104 and nanostructures, thereby illustrating that the inventive concept can be extended so that a large number of different substances in a gas can be detected simultaneously.

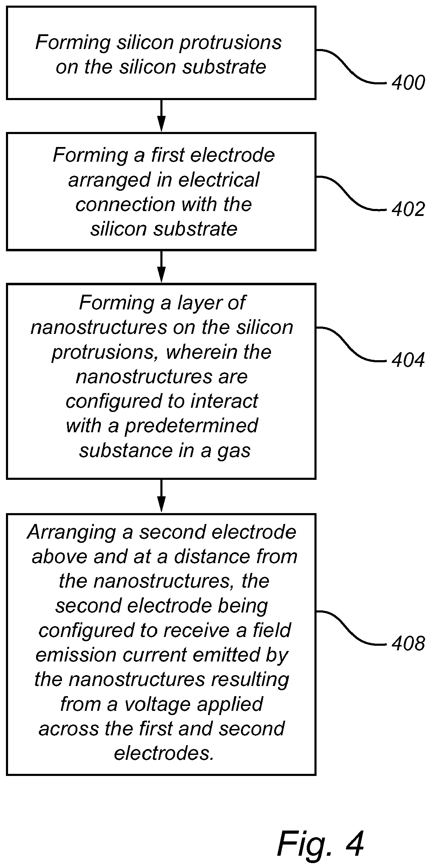

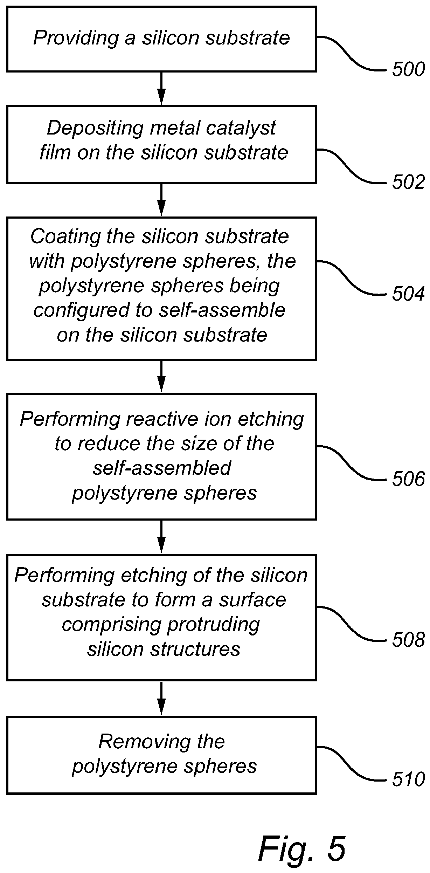

Fig. 4 is a flow chart outlining the general steps of manufacturing a gas sensor according to an embodiment of the invention. First a silicon substrate is provided and silicon protrusions 104 are formed on the silicon substrate to form a black silicon substrate 102. An example method of forming silicon protrusions 104 will be described below with reference to Fig. 5.

Next, a first electrode 108 is formed in electrical connection with the silicon substrate 102. The first electrode 108 may be a gold layer or the like deposited on the silicon substate for example on a side of silicon substrate, adjacent to an active sensing area of the gas sensor or on the backside of the sensor. Moreover, the first electrode may be a common electrode for a plurality of separate area portions of the gas sensor.

The next step comprises forming 404 a layer of nanostructures 106 on the silicon protrusions 104, wherein the nanostructures 106 are configured to interact with a predetermined substance in a gas. Forming a layer of nanostructures 106 on the silicon protrusions 104 may also be referred to as functionalization of the black silicon substrate 102.

The method further comprises arranging 406 a second electrode 110 above and at a distance from the functionalized substrate 102 comprising the nanostructures 106. The second electrode 110 is configured to receive a field emission current emitted by the silicon protrusions and nanostructures resulting from a voltage applied across the first and second electrodes 108, 110.

Fig. 5 is a flow chart outlining the steps of forming silicon protrusions 104 in the form of silicon nanorods 104 on a silicon substrate 102 using metal assisted chemical etching (MACE).

The starting point is to provide 500 a clean and contaminant-free silicon substrate, such as a silicon wafer. A catalyst layer in the form of a thin metal layer such as Au or Ag is deposited 502 onto the substrate using techniques like physical vapor deposition (PVD) or sputtering. The catalyst layer is important for the fabrication process since the catalyst layer serves as initiation sites for the chemical etching process. In particular, the catalyst layer provides the necessary surface sites for the etching solution to react and start the selective removal of silicon. In addition, it enables the selective etching, influences the shape and size of the resulting silicon nanorods, and also plays a role in determining the density and uniformity of the nanorod array. It is thus important to optimize the catalyst layer deposition parameters, such as thickness, morphology, and material, to achieve the desired silicon nanorod characteristics. The catalyst layer acts as a key facilitator in the controlled growth and formation of vertically aligned conical black silicon nanorods during the MACE process.

The silicon substrate is subsequently coated 504 by a monolayer of polystyrene spheres, where the polystyrene spheres are configured to self-assemble on the silicon substrate. Coating is performed by forming a solution of polystyrene (PS) spheres having a diameter in the range of 50 nm to 100 nm and the solution is spin-coated or drop-cast onto the substrate to form a self-assembled monolayer of polystyrene spheres.

Once a monolayer of polystyrene spheres is formed on the silicon substrate, annealing (heat treatment) is performed to partially melt the PS-spheres, thereby facilitating the adhesion of the PS-spheres to the silicon substrate.

Next, the silicon substrate is subjected to oxygen plasma treatment in an oxygen plasma chamber. Oxygen plasma is applied to the PS-spheres to reduce diameter of the PS-spheres. The time and power of the plasma treatment is preferably tailored to achieve the desired size reduction resulting in PS-spheres having a size in the range of 20 nm to 50 nm.

The following step comprises performing 508 etching of the silicon substrate to form a surface comprising silicon nanorods. The etching solution is prepared by mixing hydrofluoric acid (HF) with an oxidizing agent like hydrogen peroxide (H2O2) and Ethanol (C2H5OH). The exact concentrations may vary based on desired etching characteristics. The silicon substrate with the PS monolayer comprising reduced-diameter PS-spheres is immersed in the etching solution. The metal catalyst initiates the etching process, selectively removing silicon between the PS spheres and forming conical nanorods. The etching process is monitored to control the etching depth and to ensure uniform nanorod formation.

Following etching, the polystyrene spheres are removed 510. The substrate is removed from the etching solution and is immersed substrate with the nanorods and remaining PS spheres into a suitable solvent like toluene, xylene, or chloroform. Mechanical agitation through sonication aids removal and dissolution of the remaining PS spheres. The substrate is removed from the solvent, rinsed with clean solvent to remove any residual PS particles or solvent, and is then allowed to dry. Air drying or using nitrogen can be employed.

Any remaining catalyst metal (e.g. Au) is allowed to remain on the tips of the silicon nanorods since a thin metal layer on top of the nanorods may improve the current density in the field emission process during sensing.

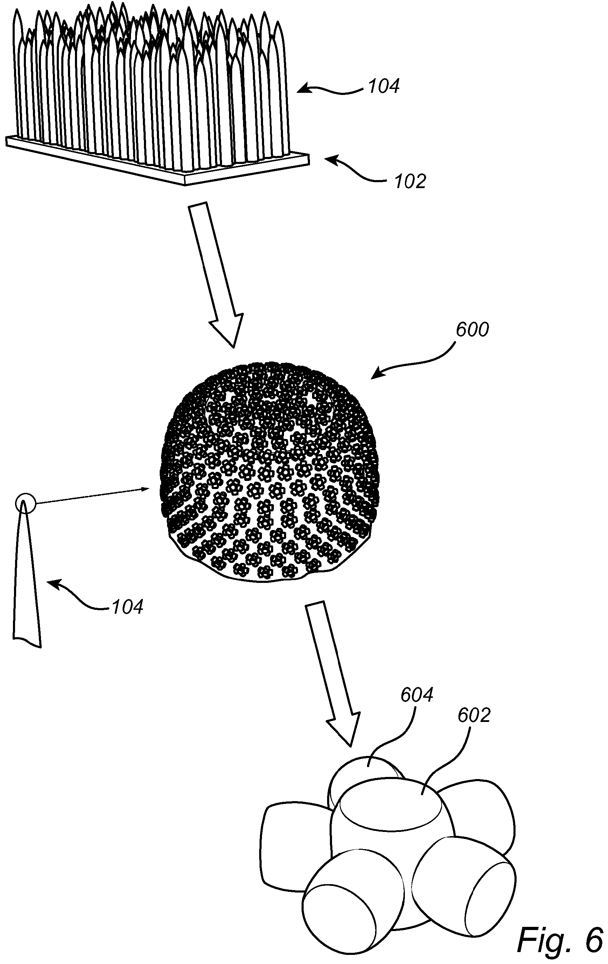

Fig. 6 schematically illustrates an example embodiment where the nanostructures 600 comprise cucurbit[8]uril-capped Au nanoparticles 602.

Cucurbiturils are commonly written as cucurbit[n]uril, where n is the number of glycoluril units. Two common abbreviations are for Cucurbiturils are CB[n], or simply CBn. Cucurbiturils can form macromolecular cages which have three-dimensional chambers surrounded by a molecular framework. Here, cucurbit[8]uril cages 604 attach to and at least partially enclose the Au nanoparticle 602. Cucurbit[8]uril-capped Au nanoparticles (Au NPs) refers to gold nanoparticles that have been capped or coated with cucurbit[8]uril molecules. In this case, cucurbit[8]uril has a basket-like shape with a cavity in the center that can encapsulate small molecules or ions. By capping or coating gold nanoparticles with cucurbit[8]uril, it is possible to enhance the stability and dispersibility of nanoparticles in a solution, as well as tune their physical and chemical properties.

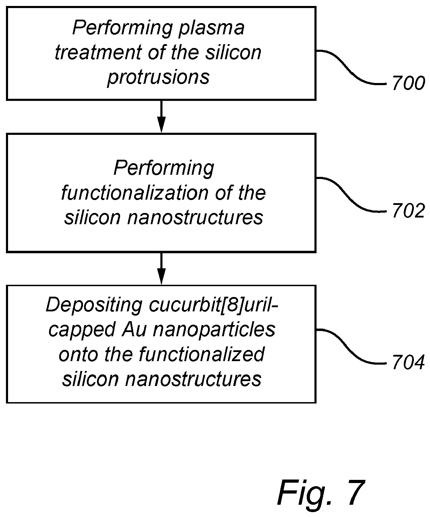

Fig. 7 is a flow chart outlining the general steps of forming a layer of cucurbit[8]uril-capped Au nanoparticles on silicon nanorods. The method comprises performing 700 low-pressure oxygen or argon plasma treatment of the silicon nanorods; performing 702 functionalization of the silicon protrusions forming carboxyl groups or amino groups on the silicon protrusions. The carboxyl or amino groups on the surface of the silicon nanorods would allow for the attachment of the thiolated CB[8] ligand on the surface of the Au NPs. This would enable the Au NPs to interact specifically with methyl nitrate molecules, leading to an increase in the sensitivity and selectivity of the gas sensor. This can be achieved by treating the nanorods with appropriate silanes or organometallics such as 3-aminopropyltriethoxysilane (APTES) or 3-mercaptopropyltrimethoxysilane (MPTMS) to introduce the functional groups. For example, to introduce carboxyl groups, the silicon substrate comprising the silicon nanorods can be immersed in a solution of succinic anhydride, while to introduce amino groups, the nanorods can be immersed in a solution of 3-aminopropyltriethoxysilane.

Moreover, the functionalization process can be optimized by varying the concentration of the functionalization reagents and the reaction time. This can be done by analyzing the surface chemistry of the nanorods using techniques such as X-ray photoelectron spectroscopy (XPS) or Fourier transform infrared (FTIR) spectroscopy.

The next step comprises depositing 704 cucurbit[8]uril-capped Au nanoparticles onto the functionalized silicon nanostructures. The cucurbit[8]uril-capped Au nanoparticles can be deposited using a self-assembly deposition technique selected from the group of drop-casting and spin-coating.

The Au NPs can be synthesized using a method such as the citrate reduction method. In this method, a gold salt solution is reduced with sodium citrate to form Au NPs. Next, surface functionalization of Au NPs with cucurbit[8]uril can be performed by adding cucurbit[8]uril to the Au NP solution and allowing the cucurbit[8]uril molecules to adsorb onto the surface of the AuNPs. The solution is then centrifuged to remove any unbound cucurbit[8]uril molecules.

Furthermore, Annealing of the CB[8]-capped Au NP-coated black silicon nanorods can help to enhance the stability and uniformity of the nanostructure layer. Annealing at a temperature of 80-100°C for a few hours can improve the stability of the nanostructure layer without causing any damage to the silicon nanorods or nanostructures.

The use of black silicon nanorods as the substrate in a gas sensor provides a high surface area for functionalization, while CB[8] and Au NPs offer the ability to selectively capture and detect methyl nitrate. Furthermore, the described method leverages plasma treatment and layer-by-layer self-assembly techniques to modify the surface of the silicon nanorods and functionalize the CB[8] and AuNPs. Overall, the proposed method and gas sensor has potential to significantly advance the field of gas sensing and lead to the development of highly sensitive and selective sensors for environmental monitoring and industrial applications.

The detection process can be described by the following:
1. Gas exposure: The black silicon nanorods functionalized with CB[8]-capped gold nanoparticles (AuNPs) are exposed to the target gas where methyl nitrate (CH3NO3) molecules in the gas phase come into contact with the CB[8] host molecules on the surface of the AuNPs.
2. Host-guest interaction: CB[8] has a unique host-guest binding ability. The CB[8] cavities can selectively trap and bind guest molecules, such as methyl nitrate. When methyl nitrate molecules come in proximity to the CB[8]-capped AuNPs, they can attach themselves to the CB[8] cavities through host-guest interactions. This attachment is typically reversible.
3. Electron emission modulation: The presence of methyl nitrate molecules attached to the CB[8]-capped AuNPs on the black silicon nanorods surface influences the electron emission properties of the silicon nanorods. The attachment of methyl nitrate molecules can cause changes in the local electric field or alter the work function of the AuNPs.
4. Field emission current changes: The black silicon nanorods, under the application of an electric field, emit electrons from their tips through field emission. The presence of attached methyl nitrate molecules on the CB[8]-capped AuNPs modulates the electron emission process. This modulation leads to changes in the emitted electron current.
5. Current measurement and analysis: The changes in the emitted electron current are measured and analyzed. The magnitude or characteristics of the current change can be correlated with the concentration or presence of methyl nitrate gas. The specific relationship between the current change and the gas concentration is determined through calibration and experimentation.

In summary, the detection process involves the attachment of methyl nitrate molecules to the CB[8]-capped AuNPs on the black silicon nanorods surface. This attachment influences the electron emission properties of the nanorods, leading to changes in the emitted electron current. By measuring and analyzing these current changes, it is possible to infer the presence or concentration of methyl nitrate gas in the environment.

The attachment of gas molecules to the CB[8] cavities on the AuNPs is typically reversible so that the gas sensor can be used repeatedly. This means that after exposure to the gas, the attached molecules can be released or detached from the CB[8] host molecules under appropriate conditions. The reversibility thus allows for the potential regeneration of the sensing layer after gas exposure.

The cleaning and regeneration of a methyl nitrate sensor using CB[8]-capped gold nanoparticles (AuNPs) on black silicon nanorods would depend on the specific properties of the sensing materials and the saturation level reached during gas exposure. Various methods can be employed to clean or regenerate the sensor after exposure to methyl nitrate. These methods may involve altering environmental conditions, such as temperature or gas flow, to promote the detachment or desorption of the methyl nitrate molecules from the CB[8] cavities. Techniques such as purging the sensor with an inert gas or exposing it to specific chemicals can also be considered for cleaning purposes.

If the sensor becomes saturated with methyl nitrate molecules, the performance and sensitivity may be affected. Saturation can occur when the concentration of methyl nitrate reaches a point where the available CB[8] cavities on the AuNPs are fully occupied. In such cases, the sensor may require regeneration or replacement of the sensing layer to restore its functionality.

According to an example embodiment, forming a layer of nanostructures 106 on the silicon protrusions comprises: depositing a supramolecular Fe^{II}₄L₄ cage on the silicon protrusions using a linker molecule to enable sensing of ammonia. Moreover, depositing the supramolecular Fe^{II}₄L₄ cage comprises immersing the silicon protrusions in a solution comprising supramolecular Fe^{II}₄L₄ cages and at least one linker molecule selected from the group comprising 3-mercaptopropionic acid (MPA) and 11-mercaptoundecanoic acid (MUA). The supramolecular Fe^{II}₄L₄ cage may advantageously be functionalized using gold nanoparticles.

Synthesis of supramolecular Fe II4L4 cage can be done in different ways as will be described in the following. The synthesis can for example involve mixing the appropriate Fe(II) salt with organic ligands in a suitable solvent and carrying out a series of purification steps.
a. Synthesis of Fe II4L4 cage: The Fe II4L4 cage is typically synthesized using organic ligands that contain chelating groups, which can bind to the Fe II ions and stabilize the cage structure. The synthesis can be carried out using established protocols in the literature.
b. Functionalization of Fe II4L4 cage with linker molecules: The Fe II4L4 cage can be functionalized with appropriate linker molecules that contain thiol or amine groups, which can bind to the gold nanoparticles and enable immobilization onto the black silicon nanorods. The linker molecules can be synthesized using established protocols or purchased from commercial sources. The functionalization can be carried out by incubating the Fe II4L4 cage in a solution containing the linker molecules, followed by purification and characterization steps to remove any unbound linker molecules and confirm the functionalization.
c. Gold functionalization: The gold nanoparticles can be synthesized using established protocols, such as the citrate reduction method or the seed-mediated growth method. The synthesized gold nanoparticles can be functionalized with appropriate thiol-containing molecules, such as 1-dodecanethiol or 11-mercaptoundecanoic acid, to enable binding to the linker molecules on the Fe II4L4 cage. The gold functionalization can be carried out by incubating the gold nanoparticles in a solution containing the thiol-containing molecules, followed by purification and characterization steps to remove any unbound molecules and confirm the functionalization.
d. Immobilization onto black silicon nanorods: The prepared gold-capped Fe II4L4 cage can be immobilized onto the black silicon nanorods.

Once the supramolecular Fe^{II}₄L₄ cages are synthesized, a black silicon substrate comprising silicon protrusions such as silicon nanorods can be cleaned and functionalized with appropriate linker molecules, such as 3-aminopropyltriethoxysilane (APTES) or 3-mercaptopropyltrimethoxysilane (MPTMS), which can bind to the gold-capped Fe II4L4 cage. The functionalization can be carried out by incubating the silicon nanorods in a solution containing the linker molecules

The prepared gold-capped Fe II4L4 cage can then be added to the solution containing the linker-functionalized black silicon nanorods. The thiol or amine groups on the linker molecules can bind to the gold nanoparticles on the Fe II4L4 cage, resulting in immobilization of the cage onto the black silicon nanorods.

In summary, the described method can be used to develop a Supramolecular Fe II4L4 cage immobilized onto vertically aligned black silicon nanorods for fast ammonia sensing, with potential applications in various fields, including environmental monitoring and industrial process control.

In the following, further examples of nanostructures for detection of different substances in gas will be described. It should be noted that the described manufacturing parameters are given as examples and that various process steps and parameter may be varied, the end result still providing a functionalization of the silicon nanorods capable of detecting the respective substance in a gas. The following different functionalizations and manufacturing methods have to varying extents been previously described in literature, but not in connection with a gas sensor based on black silicon.

### Example 1 - CuO nanowires functionalized with PEDOT (poly(3,4-ethylenedioxythiophene)) for detection of acetone.

CuO nanowires are fabricated on b-Si by depositing a thin layer of e.g., molybdenum (Mo) at a thickness of around 5 nm via sputtering deposition prior to copper deposition. Next, Copper is sputtered on the surface of the molybdenum-coated black silicon to achieve a coating thickness of around 600 nm. After Cu deposition, the substrate is pre-treated to remove surface oxide and impurities by soaking it in 1 mol/l hydrochloric acid for 30 seconds, followed by washing in ethanol and deionized water, followed by dehydration in an oven at 70°C for 3 h. Then, the substrates were annealed in a tube furnace at 200°C for 2 h with nitrogen protection, where the CuO nanowires were finally formed.

The coating of PEDOTs on CuO nanowires was performed via an electropolymerization method in a solution containing 50 mM EDOT monomer with 1 mM tetrabutylammonium perchlorate (TBAP) as the supporting salt and acetonitrile (ACN) as the solvent. The substrates were mounted on a gold electrode and served as the working electrode (WE). A large platinum (Pt) plate (~0.75 cm²) was used as the counter electrode (CE). The two electrodes were immersed in a sealed chamber at a distance of 5 mm. the chamber was covered to minimize the evaporation of ACN. An automatic polarization was used to apply potentials within a range of ±2.0 V with a deposition time varied from 10 to 480 s. The resulting composite nanostructures were dried in air for approximately 24 h. The composite's thickness was determined based on the difference between the mass of the initial substrate and that of the substrate covered with the PEDOT film.

### Example 2 - Gold-platinum bimetallic nanocatalysts for detection of acetone.

Bimetallic nanocatalysts (NCs) is a subclass of heterogeneous catalysts that have two related metallic compounds with different characteristics. Bimetallic NCs features can be easily modified and enhanced to boost their sensitivity and selectivity thanks to these bifunctional and synergistic effects.

Here, Au-Pt bimetallic NCs will be incorporated on metal oxide coated black silicon sensors. Several metal oxides, such us Zinc Oxide, Chromium Oxide and Molybdenum Oxide can be coated onto black silicon tips via flame-assisted evaporation prior to attachment of Au-Pt NCs.

Bimetallic AuPt NCs can be synthesized by co-reduction reaction of Au and Pt precursors in the presence of Oleylamine (OAm). OAm was added to a three-neck flask in air and heated up to 110 °C. After OAm was stirred and refluxed for 10 min, H2PtCl6·6H2O aqueous solution and HAuCl4·4H2O aqueous solution were added. The mixture was heated up to 220 °C and held for 10 min. Then, the mixture was continuously heated up to 240 °C and held for another 10 min. The precipitation of AuPt NCs was then centrifuged and washed with n-hexane (C6H14) and ethanol. Finally, the products were dispersed in C6H14 as stock solution.

Functionalization of Bimetallic AuPt NCs with CH3-SAMs AuPt NCs from stock solution were dispersed in ethanol. The solution was then slowly stirred to avoid the particles aggregating each other. In different flask, CH3 terminated self-assembled monolayers (SAMs), hexadecane thiol dissolved in ethanol and the solution was stirred for 5 minutes. Then this solution was added to AuPt NCs and continue slowly stirred for about 40 minutes. The sensor substrate was then immersed on CH3-SAMS-functionalized AuPt NCs for 24 hours to let AUPt nanoparticles become trapped inside the surface roughness.

### Example 3 - SnO2 nanorods functionalized with PEDOT (poly(3,4-ethylenedioxythiophene for detection of carbon monoxide.

A SnO2 sol suspension was prepared by hydrothermal treatment method. And then the above SnO2 transparent sol was added to a NaOH solution with stirring to obtain an opaque solution. After that, cetyltriethyl ammonium bromide (CTAB) was added into the opaque solution, followed by heating to make CTAB dissolve completely. Then the mixture was poured into a stainless teflon-lined autoclave and heated to 140 °C for 20 hours. After cooled down to room temperature, the resulting white precipitate was collected by centrifugation, washed with ethanol for several times and annealed at 600°C for 3 hours. SnO2 nanorods were obtained as white powder.

SnO2 nanorods were then adsorbed on black silicon by first dissolving SnO2 nanorods powder in a NaOH solution. Cetyltriethyl ammonium bromide (CTAB) was slowly added to the solution until the solution color turn in to opaque. Then black silicon wafers were immersed into the solution for about 1 h. The substrate was then removed and placed into an autoclave and were heated to 140 °C for 20 hours. After cooled down to room temperature, SNO2 coated black silicone samples were washed with ethanol followed by annealing at 600°C for 3 hours.

The coating of PEDOTs on SnO2 nanorods coated black silicon was performed via electropolymerization method in a solution containing 50 mM EDOT with 1 mM tetrabutylammonium perchlorate (TBAP) as the supporting salt and acetonitrile (ACN) as the solvent. The samples were mounted on gold electrode and serve as the working electrode (WE). A large platinum (Pt) plate (~0.75 cm²) was used as counter electrode (CE). The two electrodes were immersed in a sealed chamber at a distance of 5 mm. The chamber was covered to minimize the evaporation of ACN. An automatic polarization was used to apply potentials within a range of ±2.0 V with the deposition time varied from 10 to 480 s. The resulting composite materials were dried in air for approximately 24 h.

### Example 4 - Polypyrrole nanoparticles functionalized with Fe for detection of ammonia.

The first step comprises synthesis of Fe doped-PPy powder. Pyrrole monomer was distilled under vacuum and stored at 3°C in refrigerator before use. Iron (III) chloride hexahydrate was used as oxidant and dopant. Sodium dodecyl sulphate, used as surfactant and dispersant and methanol used for the washing solvent. The surfactant (SDS) was added to distilled water and stirred moderately with a magnetic stirrer. The solution was stirred for 30 minutes at room temperature until the surfactant is completely dissolved. When a clear aqueous solution of surfactant was obtained, the monomer (pyrrole) was added dropwise to the solution while stirring. After obtaining a mixture of aqueous surfactant solution and the monomer, an aqueous solution of the oxidant (FeCl3, 6H2O) in distilled water was added dropwise to the mixture. Immediate formation of black PPy precipitate could be observed after addition of the oxidant. The polymerization process was carried out for 3 hours at room temperature by moderate stirring. The black PPy precipitate was filtered off and washed with water and methanol. The black PPy powder was dried under vacuum at room temperature for 10 hours.

Coating of Fe-doped PPy on black silicon was done by first filtering out and washing PPy powder with distilled water and methanol to remove any impurities and reacting monomers. The PPy was dried for two days at room temperature. The PPy powder was dissolved in m-cresol to prepare the concentrated solution. The solution preparation requires 11 hours of stirring make the solution homogenous. A thin film of PPy was deposited on pre cleaned black silicon substrates using spin cast technique at a speed of 3000 rpm for 20 seconds. The thin film was dried at 250 C for 24 hour.

### Example 5 - SnO2/ZnO composite nanorods for detection of ethanol.

Adsorption of SnO2/ZnO on black silicone surface was done via flame spray pyrolysis (FSP) method. Black silicon wafers were mounted on a water-cooled holder at a distance of 20 cm from the flame. Solution consists of zinc acetate (Zn(C2H3O2)2) and tin (IV) chloride pentahydrate (SnCl4.5H2O) with absolute ethanol as solvent. The molar ratio Zn/Sn was kept at 3:1 and samples with pure both SnO2 and ZnO were used as references. The mixed solution was ultrasonicated for a minute and directly sprayed onto the substrate by a spray gun. The spraying speed was kept at 5 L min-1 and dispersed by 5 L min-1 oxygen (pressure drop 1.5 bar) into a fine spray, that is ignited by a ring-shaped flamelet of premixed methane/ oxygen (1.25/3.2 L min-1). In-situ annealing at with a particle free flame was done to improve the adhesion and cohesion of the FSP-deposited particle film. After cooling down, the samples were removed from the chamber and were rinsed in ethanol to remove impurities. The samples were then annealed in a tube furnace at 350 °C for 1 h with nitrogen protection.

### Example 6 - Silicon nanorods functionalized with Polypyrrole nanoparticles for detection of IPA (isopropanol).

Black silicon wafers were used as substrates. First, Ag nanoparticles were deposited on to b-si surface prior to the chemical etching reaction. The etching solution was prepared by mixing silver nitrate (AgNO3) and HF. Black silicon substrates were then dipped in this etching solution at room temperature for about 100 minutes to deposit Ag nanoparticles. For the second step of the chemical etching reaction, HNO3 solution was used. The b-si substrates from the first etching were dipped into this solution for about 30 minutes. After the etching, the residual Ag nanoparticles were removed by immersing them in HNO3 solution.

The coating of si-nanorods was performed via the vapor chemical polymerization (VCP) method. Briefly, a solution containing sodium dodecyl benzene sulfonic (SDBS) and ammonium persulfate (APS) with deionized water as solvent was prepared. The solution was dripped on the si-nanorods followed by incubation in the oven at 60°C for 60 seconds. The incubation was repeated 5 times to get a uniform coverage of the APS oxidizing agent. Then, samples were placed in a pyrrole monomers solution for further vapor chemical polymerization (VCP). The polymerization process was done in an airtight chamber for 30 min under appropriate low pressure at room temperature.

### Example 7 - Ti doped-ZnO nanoparticles on black silicon for detection of isoprene.

Adsorption of Ti doped- ZnO nanoparticles on black silicone surface was done via a flame spray pyrolysis (FSP) method. Black silicon wafers were mounted on a water-cooled holder at a distance of 20 cm from the flame. The solution consists of zinc 2-ethyl hexanoate and titanium tetraisopropoxide diluted in xylene. The concentration of Ti dopant was kept at 2.5 % and Ti concentration at 0%% was used as a reference. This solution is supplied at 5 mL min-1 through the FSP nozzle and dispersed by 5 L min-1 oxygen (pressure drop 1.5 bar) into a fine spray, that is ignited by a ring-shaped flamelet of premixed methane/ oxygen (1.25/3.2 L min-1). In situ annealing at with a particle-free flame was done to improve the adhesion and cohesion of the FSP-deposited particle film. After cooling down, the samples were removed from the chamber and were rinsed in ethanol to clean up the impurities. The samples were then annealed in a tube furnace at 500°C for 5 h with nitrogen protection.

### Example 8 - Cu functionalized cucurbituril cages for detection of 2-pentyl nitrate.

Black silicon wafers were coated by e.g., titanium (Ti) at a thickness of around 2.5 nm via sputtering deposition prior to gold deposition. Next, gold was sputtered on the surface of titanium-coated black silicon.

The attachment of cucurbit[6]uril (CB6) on gold-coated black silicone was performed via spontaneous adsorption of a self-assembled monolayer of CB6 molecules directly on gold surface. Prior to use, the gold coated substrate was cleaned with H2SO4/H2O2, rinsed with deionized water, and then dried with a stream of N2. The gold substrate was incubated for 24 h at room temperature in a saturated CB[6] aqueous solution. Following this treatment, the surfaces were thoroughly rinsed with ultrapure water and absolute ethanol and dried with high-purity nitrogen

The adsorption of copper ions on the CB6-immobilized substrate was performed via an electrodeposition method by use of an electrochemical cell. The cell is an electronic circuit with three different electrodes connected to a potentiostat. An electric field was applied to transmit electrons from the working electrode to the ions in the copper solution, initiating chemical reactions. The amount of applied voltage determines whether a reduction or oxidation reaction occurs. Cyclic voltammetry (CV) was applied to study the chemical reactions in the solution. The measurement is followed by linear sweep voltammetry to stimulate copper deposition on a CB6 immobilized gold substrate which was used as a working electrode (WE). Silver chloride (AgCl) and platinum-iridium (Pt- Ir) wires were used as reference electrodes (RE) and counter electrodes (CE), respectively. The 3 electrodes were connected on a potentiostat. The aqueous solution contained CuSO4 in H2SO4. Sulfuric acid was added to the solution for stabilization and to prevent the formation of the copper precipitate.

Even though the invention has been described with reference to specific exemplifying embodiments thereof, many different alterations, modifications and the like will become apparent for those skilled in the art. Also, it should be noted that parts of the sensor and methods may be omitted, interchanged or arranged in various ways, the sensor and methods yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A gas sensor (100, 200) comprising:
a black silicon substrate (102) comprising silicon protrusions (104);
a layer of nanostructures (106) arranged on the silicon protrusions, wherein the nanostructures are configured to interact with a predetermined substance in a gas;
a first electrode (108) arranged in electrical connection with the black silicon substrate; and
a second electrode (110) arranged above and at a distance from the nanostructures and configured to receive a field emission current being emitted by the silicon protrusions and nanostructures resulting from a voltage applied across the first and second electrodes.

2. The gas sensor according to claim 1, wherein the silicon protrusions are formed through metal assisted chemical etching.

3. The gas sensor according to any one of the preceding claims, wherein the silicon protrusions have a height in the range of 1 µm to 3 µm.

4. The gas sensor according to any one of the preceding claims, wherein the silicon protrusions have a substantially conical shape.

5. The gas sensor according to any one of the preceding claims, wherein the silicon protrusions have a base diameter in the range of 50 nm to 200 nm.

6. The gas sensor according to any one of claims 1 to 5, wherein the nanostructures comprise cucurbituril cages functionalized with Cu.

7. The gas sensor according to any one of claims 1 to 5, wherein the nanostructures comprise cucurbit[8]uril-capped AU nanoparticles.

8. The gas sensor according to any one of claims 1 to 5, wherein the nanostructures comprise supramolecular FeII4L4 cages.

9. The gas sensor according to any one of the preceding claims, wherein the gas sensor comprises a first area portion (202) comprising a first type of nanostructures (106) configured to interact with a first substance in a gas and a second area portion (206) comprising a second type of nanostructures (204) configured to interact with a second substance in a gas, the second substance being different from the first substance.

10. Method of manufacturing a gas sensor, the method comprising:
providing a silicon substrate (102);
forming (400) silicon protrusions (104) on the silicon substrate;
forming (402) a first electrode (108) arranged in electrical connection with the silicon substrate;
forming (404) a layer of nanostructures (106) on the silicon protrusions, wherein the nanostructures are configured to interact with a predetermined substance in a gas;
arranging (406) a second electrode (110) above and at a distance from the nanostructures, the second electrode being configured to receive a field emission current emitted by the silicon protrusions and nanostructures resulting from a voltage applied across the first and second electrodes.

11. The method according to claim 10, wherein forming silicon protrusions on the silicon substrate comprises using metal assisted chemical etching comprising the steps of:
providing (500) a silicon substrate;
depositing (502) a metal catalyst film on the silicon substrate;
coating (504) the silicon substrate with polystyrene spheres, the polystyrene spheres being configured to self-assemble on the silicon substrate;
performing (506) reactive ion etching to reduce the size of the self-assembled polystyrene spheres;
performing (508) etching of the silicon substrate to form a surface comprising protruding silicon structures; and
removing (510) the polystyrene spheres.

12. The method according to any one of claims 10 to 11, wherein forming a layer of nanostructures (106) on the silicon protrusions comprises:
performing (700) plasma treatment of the silicon protrusions;
performing (702) functionalization of the silicon protrusions;
depositing (704) cucurbit[8]uril-capped Au nanoparticles onto the functionalized silicon protrusions.

13. The method according to claim 12, wherein performing functionalization of the silicon protrusions comprises forming carboxyl groups or amino groups on the silicon protrusions.

14. The method according to any one of claims 10 to 11, wherein forming a layer of nanostructures (106) on the silicon protrusions comprises:
depositing a supramolecular Fe^{II}₄L₄ cage on the silicon protrusions using a linker molecule.

15. The method according to claim 14, wherein depositing the supramolecular Fe^{II}₄L₄ cage comprises immersing the silicon protrusions in a solution comprising supramolecular Fe^{II}₄L₄ cages and at least one linker molecule selected from the group comprising 3-mercaptopropionic acid (MPA) and 11-mercaptoundecanoic acid (MUA).
